# EUROPEAN PATENT SPECIFICATION

(11) **EP 3 166 307 B1**
(45) Date of publication and mention of the grant of the patent: **04.03.2020**
(21) Application number: 16196267.5
(22) Date of filing: 28.10.2016
(51) Int. Cl.: H04N 5/232, B60R 1/00

(54) **CAPTURING DEVICE FOR A MOTOR VEHICLE, DRIVER ASSISTANCE SYSTEM AS WELL AS MOTOR VEHICLE**
ERFASSUNGSVORRICHTUNG FÜR EIN KRAFTFAHRZEUG, FAHRERASSISTENZSYSTEM SOWIE KRAFTFAHRZEUG
DISPOSITIF DE CAPTURE POUR UN VÉHICULE AUTOMOBILE, SYSTÈME D'ASSISTANCE CONDUCTEUR AINSI QUE VÉHICULE AUTOMOBILE

(30) Priority: 05.11.2015 DE 102015118977
(43) Date of publication of application: 10.05.2017
(73) Proprietor: Connaught Electronics Ltd., Tuam, County Galway (IE)
(72) Inventor: Dr. Jauregui Urbahn, Kristian, 74321 Bietigheim-Bissingen (DE)
(74) Representative: Jauregui Urbahn, Kristian

(56) References cited:
- EP-A1- 1 407 931
- EP-A1- 2 544 162
- US-A1- 2009 102 858
- US-A1- 2012 050 024
- US-A1- 2014 285 666

## Description

The invention relates to a capturing device for a motor vehicle for monitoring an environmental region of the motor vehicle, including a camera-monitor system comprising at least one camera for capturing the environmental region in images and at least one display device for displaying the images captured by the camera, and including a control device for varying a brightness and/or a contrast of the images displayed by the at least one display device. The invention additionally relates to a driver assistance system with a capturing device as well as to a motor vehicle with a driver assistance system.

Presently, the interest is directed to a capturing device for a motor vehicle with a camera-monitor system, by means of which so-called mirrorless driving can be allowed. Camera-monitor systems are already known from the prior art and can replace at least one rearview mirror of the motor vehicle, for example an exterior mirror and/or an interior mirror, by capturing an environmental region of the motor vehicle by at least one vehicle-side camera of the camera-monitor system in images and presenting the images captured by the at least one camera on a vehicle-side display device or a monitor of the camera-monitor system. The environmental region visible for a vehicle driver or driver of the motor vehicle in the rearview mirror in a conventional motor vehicle equipped with rearview mirrors is therefore displayed on the display device. Such a camera-monitor system is also referred to as an intelligent rearview mirror or "eMirror".

Since objects in the environmental region, which the at least one camera captures in passing these objects, appear on the display device in an opposed movement compared to objects, which the at least one camera captures upon approaching the objects, the images displayed on the display device can be irritating and disturbing for the driver of the motor vehicle. Therefore, DE 10 2012 020 170 A1 proposes adjusting a brightness and/or a contrast of the image displayed on the display device depending on a viewing direction of the driver. Thus, the driver only obtains information about the environmental region if he looks to the display device on his own initiative.

In EP2544162 A1 is described a device imaging the area surrounding the vehicle and detecting physical objects in the area surrounding the vehicle on the basis of the image which is taken. The device determines whether the detected physical object is a pedestrian or an animal, and a warning is given to the driver of the vehicle if the predetermined physical object is present within a specified area from the vehicle.

In US2009/0102858 A1 is described a camera to be used to record image data from the area surrounding a vehicle, and at least some of the image data are shown on a display following object identification and image processing.

It is the object of the present invention to provide a solution, by means of which information about an environmental region of a motor vehicle is provided to a user of the motor vehicle in particularly reliable and intuitive manner.

According to the invention, this object is solved by a capturing device, a driver assistance system as well as a motor vehicle according to the independent claims. Advantageous embodiments are the subject matter of the dependent claims, of the description and of the figures.

A capturing device according to the invention for a motor vehicle serves for monitoring an environmental region of the motor vehicle. The capturing device includes a camera-monitor system comprising at least one camera for capturing the environmental region in images and at least one display device for displaying the images captured by the at least one camera, and a control device for varying a brightness and/or a contrast of the images displayed by the at least one display device. Moreover, the control device is adapted to vary the brightness and/or the contrast of the image displayed on the at least one display device in presence of an object captured by the capturing device in a predetermined warning area of the environmental region at least in a partial image area.

In particular, the capturing device serves for monitoring a rearward environmental region of the motor vehicle. For capturing the environmental region in images, the camera-monitor system of the capturing device has the at least one camera, which is in particular formed as an exterior camera and is disposed at the outside of the motor vehicle in particular looking rearward or towards a rear area of the motor vehicle. In particular, the camera-monitor system monitors partial areas of the environmental region laterally adjoining to the motor vehicle, extending in rearward direction. In other words, this means that the camera-monitor system is in particular formed for monitoring rearward lateral areas in the environmental region of the motor vehicle. Thereto, the camera-monitor system in particular has two cameras, wherein a first camera can be disposed at the outside of the motor vehicle at a driver's side of the motor vehicle and can capture a driver-side environmental region in images, and a second camera can be disposed at the outside of the motor vehicle at a passenger's side of the motor vehicle and can capture a passenger-side environmental region of the motor vehicle in images. Thus, the capturing device replaces exterior mirrors or wing mirrors of the motor vehicle. The cameras can for example each have a so-called fish-eye lens. These fish-eye lenses have a very high viewing angle, for example 120°, such that the came ras have a particularly large capturing range for monitoring the lateral areas. A motor vehicle equipped with the capturing device according to the invention is therefore in particular a motor vehicle without wing mirrors. The camera-monitor system can also have a third camera, which is in particular formed as a rear camera and captures the environmental region behind the motor vehicle, thus the environmental region adjoining to the rear area, in images. By means of the third camera, an interior mirror of the camera can additionally be replaced.

The images captured by the at least one camera can be presented on the at least one display device of the camera-monitor system, which is in particular disposed in an interior or in a passenger cabin of the motor vehicle. The at least one display device can be configured as a screen or monitor, in particular as a touch-sensitive screen, and/or as a so-called head-up display. Therein, the camera-monitor system can have exactly one display device, which can for example be disposed on a dashboard of the motor vehicle or be integrated in an interior mirror. Therein, the image displayed on the one display device can be divided into two partial image areas in case of two cameras, wherein the driver-side environmental region can be displayed in a first partial image area and the passenger-side environmental region can be displayed in a second partial image area. In case of three cameras, the environmental region located behind the motor vehicle is displayed in an additional third partial image area of the display device.

However, it can also be provided that the camera-monitor system comprises two separate display devices, wherein a first display device is associated with the driver's side of the motor vehicle and displays the driver-side environmental region captured by the first camera and a second display device is associated with the passenger's side of the motor vehicle and displays the passenger-side environmental region captured by the second camera. The first, driver-side display device can for example be disposed in the passenger cabin on an A pillar of the motor vehicle at the driver's side and/or on a driver's door of the motor vehicle and/or on a dashboard of the motor vehicle at the driver's side. The second, passenger-side display device can for example be disposed on the A pillar at the passenger side and/or on a passenger door of the motor vehicle and/or on the dashboard at the passenger side. The display devices are therefore disposed such that the impression arises for the driver upon looking at the respective display device as if he would look into the corresponding wing mirror as in a conventional motor vehicle.

In addition, the capturing device comprises the control device, which can for example be formed by a vehicle-side controller. The control device is adapted to control the at least one display device and thus to vary a brightness and/or a contrast of the image displayed on the at least one display device. Therein, it is provided that the control device varies the brightness and/or the contrast of the image displayed on the at least one display device at least in certain areas, thus at least in a partial image area if the object has been captured by the capturing device in the predetermined warning area of the environmental region.

Thereto, the capturing device comprises an overall capturing area, which describes the area in the environmental region of the motor vehicle, in which objects can be detected by the capturing device. For capturing if an object is located in the warning area, thus, the object itself as well as the position thereof in the environmental region is detected by the capturing device. Therein, the warning area is a partial area of this overall capturing area, which is for example poorly visible for the driver of the motor vehicle and/or is disposed near to the motor vehicle. An object in this warning area can present a risk to the driver of the motor vehicle since for example in veering of the motor vehicle towards this warning area, collision with the object can impend. Such an object can for example be another motor vehicle, which travels on a lane adjacent to a lane of the motor vehicle.

By the brightness variation and/or the contrast variation in at least a partial image area of the image displayed on the at least one display device, information about the environmental region is conveyed or provided to the driver, namely that an object is located in the warning area. In presence of an object in the warning area, thus, an optical and visual warning signal, respectively, are provided to the driver. Namely, by the brightness variation and/or the contrast variation, the attention of the driver can be drawn to the display device such that he views the image of the environmental region, in which the object is in particular also located.

Therein, the control device can vary the brightness and/or the contrast of the displayed image in the entire image area or only in the partial image area. The control device can vary the brightness and/or the contrast of the image in abrupt and erratic manner, respectively. Thus, the driver can be made aware of the object in the warning area in particular insistent manner. However, the control device preferably varies the brightness and/or the contrast continuously or stepwise. By continuously varying the brightness and/or the contrast, the driver can be prevented from being glared and disturbed, respectively, by a sudden brightness variation and/or contrast variation.

By the brightness variation and/or the contrast variation of the image displayed on the at least one display device, thus, information about the environmental region can be simply and intuitively provided to the driver. Thus, particularly safe drive of the motor vehicle can be allowed by means of the capturing device. In addition, by the adequate adaptation of the brightness and/or the contrast, thus the adaptation of the brightness and/or the contrast in presence of the object, energy for the display device can be advantageously saved. Therefore, the capturing device is formed in particularly energy efficient manner.

Preferably, the control device is adapted to determine the presence of the object in the predetermined warning area based on the images captured by the at least one camera. Alternatively or additionally, the capturing device comprises a first sensor device different from the at least one camera, which is adapted to capture the presence of the object in the predetermined warning area. Therein, the object can be captured by the camera-monitor system if the object is within a capturing area of the camera-monitor system. The object can then be extracted and thereby be detected from the images captured by the at least one camera, for example by means of an object recognition algorithm. In order to capture the presence of the detected object in the warning area, the position of the object, for example a distance of the object to the motor vehicle, can be captured based on the images, for example by means of stereo algorithms. Alternatively, the at least one camera can be formed as a plenoptic camera or as a light-field camera which is able to capture an environmental region three-dimensionally. Based on the three-dimensional images, the position of the object in the environmental region can be determined. It can also be provided that the at least one camera comprises an image sensor which comprises pixels for a visible wavelength range and infrared-sensitive pixels for an infrared wavelength range. Based on the images of the environmental region captured by the infrared-sensitive pixels, the position of the object in the environmental region can be determined. Alternatively, the at least one camera can comprise an infrared filter allowing a three-dimensional image reconstruction. This is also denoted as machine vision.

The capturing device is therefore particularly simply configured since the images can be used not only for displaying for the driver, but also for object recognition. Alternatively or additionally, the object as well as the position thereof can also be captured by means of the first sensor device, which for example has at least one distance sensor. As the at least one distance sensor, the first sensor device can for example have a radar sensor and/or a laser scanner and/or an ultrasonic sensor. Such distance sensors usually operate according to the sonar principle. That is, the distance sensors emit a transmit signal reflected by the object in the environmental region of the motor vehicle. The reflected transmit signal is then received again by the distance sensor as an echo signal. Thus, the object can be detected. Based on the propagation time between emitting the transmit signal and the reception of the echo signal, the distance between the motor vehicle and the object can then be determined. By providing these distance sensors, it can be ensured that objects in the warning area can be reliably recognized for example also with an unfavorable positioning of the at least one camera, which therefore cannot completely capture the warning area. Thus, the overall capturing area of the capturing device is formed by the capturing area of the camera-monitor system and a capturing area of the first sensor device.

Preferably, respective first partial areas of the environmental region laterally adjoining to the motor vehicle, extending wedge-shaped towards a rear area of the motor vehicle are preset as the warning area. Therein, the warning area has a driver-side first partial area, which adjoins to the driver's side of the motor vehicle and expands towards the rear area, and a passenger-side first partial area, which adjoins to the passenger side of the motor vehicle and expands towards the rear area. In conventional vehicles equipped with particularly unfavorably positioned wing mirror, the warning areas can comprise an area, which can correspond to a blind spot area. For example, this blind spot area might not be visible to a driver of the motor vehicle by means of the wing mirrors. If an object has now been captured in the driver-side and/or in the passenger-side first partial area, the at least one display device is controlled by the control device for varying the image brightness and/or the image contrast.

With two display devices associated with the respective sides of the motor vehicle, it is in particular provided that only that display device is controlled for varying the image brightness and/or the image contrast, in the associated first partial area of which the object has been captured. In other words, this means that the brightness and/or the contrast are varied only in the first, driver-side display device at least in certain areas if the object has been captured in the driver-side first partial area of the warning area, and the brightness and/or the contrast are varied only in the second, passenger-side display device at least in certain areas if the object has been captured in the passenger-side first partial area of the warning area. In a display device, the image area of which is divided into partial image areas, in particular only the brightness and/or the contrast of the partial image area corresponding to the associated first partial area of the warning area are correspondingly varied at least in certain areas. The warning signal provided by the capturing device is therefore particularly intuitive for the driver since a position of the object is additionally conveyed to him as the information.

According to an advantageous embodiment of the invention, the control device is adapted to operate the at least one display device in a first operating mode in presence of the object outside of the predetermined warning area, in which the displayed image has a first value for the brightness and/or the contrast, and to transfer the at least one display device into a second operating mode different from the first operating mode upon entry of the object into the predetermined warning area, in which the displayed image has a second value for the brightness and/or the contrast greater compared to the first value at least in the partial image area. In the first operating mode, a default operating mode of the at least one display device, the image displayed on the at least one display device has the first value for the brightness or luminosity and/or the contrast. In particular, the first value is as low as the driver of the motor vehicle is not disturbed by the image displayed on the at least one display device. For example, the first value can be chosen such that the displayed image is a contrastless grey image, on which the environmental region is not or only barely recognizable. As soon as the object enters the predetermined warning area and this has been captured by the capturing device, the control device transfers the at least one display device into the second operating mode, in which the brightness and/or the contrast has the second value greater compared to the first value. In other words, the brightness and/or the contrast are increased upon transition from the first into the second operating mode. Preferably, the value is continuously, in particular gradually, increased. Therein, the second value can for example be chosen such that the image displayed on the at least one display device is a high-contrast color image, on which the environmental region, in particular the object in the environmental region, is well and clearly recognizable for the driver of the motor vehicle. Thereby, a particularly meaningful warning signal can be provided for the driver. Therein, the first value for the brightness can in particular be preset or adapted by the control device such that a predetermined contrast ratio between the first value and a brightness in the environmental region of the motor vehicle appears independently of a brightness in the passenger cabin. Thus, the first value for the brightness can be adapted to the brightness of the environmental region.

Therein, it can be provided that the second operating mode is further maintained for a preset period of time even if the object is for example no longer in the warning area. Only after the predetermined period of time, the at least one display device is again transferred into the first operating mode, in which the value for the brightness and/or the contrast is in particular continuously again decreased from the second value to the first value. Otherwise stated, the return from the second into the first operating mode is provided delayed in time such that sudden brightness variations and/or contrast variations can be avoided.

It proves advantageous if the capturing device is adapted to determine a direction of movement of the object and the control device is adapted to further operate the at least one display device in the first operating mode in case of a direction of movement of the object opposite to a direction of movement of the motor vehicle despite of entry of the object into the predetermined warning area. In particular, the at least one display device is only transferred from the first operating mode into the second operating mode if the captured direction of movement matches the direction of movement of the motor vehicle. Such objects are for example objects approaching the motor vehicle traveling in forward direction from behind. Objects approaching the motor vehicle from the front, thus opposite to the forward direction of the motor vehicle, are discarded even if they enter the warning area. Namely, these objects can be recognized by the driver himself. The direction of movement can for example be determined by the distance sensors. It can also be provided that the direction of movement of the object is determined by means of machine vision based on the images captured by the at least one camera. Therefore, an image-processing algorithm can be used which determines the direction of movement based on the images. Particularly a camera having a fish-eye lens can capture the environmental region across extensive areas, for example in a front part of the vehicle, and, thus, can capture objects approaching the motor vehicle from the front, opposite to the movement direction of the motor vehicle.

It can also be provided that the control device is adapted to further operate the at least one display device in the first operating mode in case of presence of the object within a predetermined second partial area of the environmental region different from the warning area before entry into the warning area despite of entry of the object into the predetermined warning area. In other words, this means that the object is ignored upon entry into the warning area and the at least one display device is not transferred from the first operating mode into the second operating mode if the object was already previously detected in the second partial area. Therein, the second partial area can be a partial area of the environmental region, which is for example particularly well visible to the driver without technical auxiliary means. Thus, the driver can be prevented from being unnecessarily warned and being distracted from his driving job.

Therein, it can be provided that the capturing device comprises a second sensor device different from the at least one camera for monitoring a front-side partial area of the environmental region adjoining to a front area of the motor vehicle as the second partial area, and the control device is adapted to further operate the at least one display device in the first operating mode in case of presence of the object within the front-side partial area before entry into the warning area despite of entry of the object into the warning area. The second sensor device can for example comprise a front camera and/or a laser scanner and/or a radar sensor and monitor the environmental region in front of the motor vehicle. By means of the second sensor device, thus, objects in front of the motor vehicle, for example in a distance of between 50 and 150 meters to the motor vehicle, can be detected. If objects were detected by the second sensor device, thus, they are ignored upon entry into the warning area and the at least one display device remains in the first operating mode. Namely, with objects located in front of the motor vehicle, it can be assumed that they have already been recognized by the driver through a windscreen of the motor vehicle and thus warning of the driver is unnecessary. By suppressing the warning, thus, by preventing the transfer of the at least one display device from the first operating mode into the second operating mode, disturbance of the driver of the motor vehicle can advantageously be prevented.

In a development of the invention, the at least one display device is adapted to present the image as a contrastless grey image in the first operating mode of the at least one display device and as a high-contrast color image in the second operating mode. This means that in the first operating mode, thus in the default operating mode, the image captured by the at least one camera is presented with such a low brightness and/or such a low contrast that the display device appears grey. Thus, a real or recognizable image is not displayed for the driver. In the first operating mode, the display device is in particular in a rest mode such that the at least one display device consumes particularly little energy in this operating mode. For example, if the object is now in the predetermined warning area, the first operating mode of the at least one display device is terminated by the control device. The at least one display device is transferred into the second operating mode, in which the brightness and/or the contrast are increased such that the recognizable, high-contrast color image is provided for the driver.

In particular, the at least one display device has a light emitting transmitting element for outputting a standby operation of the at least one display device, wherein the control device is adapted to control the transmitting element in the first operating mode of the at least one display device, in which the at least one display device presents the contrastless grey image, for emitting light and thereby for outputting the standby operation of the at least one display device. By means of the transmitting element, thus, functionality or standby operation of the display device can be visualized to the user if the image displayed on the display device appears grey in the first operating mode. Such a light emitting transmitting element can for example be a light emitting diode, which for example is illuminated in green at least in the first operating mode of the at least one display device. Thus, the at least one display device can advantageously be prevented from appearing defect or non-functional to the driver in displaying the contrastless grey image. It can be provided that the control device is adapted to additionally terminate the first operating mode of the at least one display device in user-initiated manner. Thus, it can be ensured that the environmental region is clearly perceivably and recognizably displayed for the driver also independently of the presence of the object in the warning area if he wishes it. After termination of the first operating mode, the at least one display device can be transferred into the second operating mode or be transferred into a third operating mode. In the third operating mode, the displayed image can have a third value for the brightness and/or the contrast between the first and the second value. Otherwise stated, the image has the highest brightness and/or the highest contrast in the second operating mode and thus forms a clear warning signal.

For terminating the first operating mode, a viewing direction of the driver can for example be detected and the at least one display device can be transferred into the second or third operating mode if it has been acquired that the driver looks in the direction of the at least one display device for capturing the environmental region. Alternatively or additionally, an operating element, for example an operating button or a touch-sensitive area, can be provided on the at least one display device. By actuating the operating element on the part of the driver, he can initiate the transfer of the at least one display device from the first into the second or third operating mode. In addition, it can be provided that the at least one display device is always transferred into the second or third operating mode if the driver engages a reverse gear. Namely, in reversing, the capture of the rearward environmental region by the driver is particularly important. With the engaged reverse gear, the in particular rearward environmental region is therefore displayed on the display device such that the driver can particularly well see it. The capturing device is therefore configured in particularly user-friendly manner.

It proves advantageous if the control device is adapted to preset a speed of variation of the brightness and/or the contrast depending on a speed of the captured object and/or depending on a distance of the captured object to the motor vehicle. Therein, the speed can be increased with increasing speed of the object and/or with decreasing distance of the object to the motor vehicle. Therein, the distance of the motor vehicle to the object is in particular a distance from the rear area and/or the lateral area of the motor vehicle to the object. Therein, the object can for example be another motor vehicle approaching the motor vehicle from behind on an adjacent lane, with which collision can impend upon a veering operation of the motor vehicle. The speed of the brightness variation and/or the contrast variation can also be varied depending on the direction of travel of the motor vehicle. Therein, the speed can for example be increased if the motor vehicle approaches the object by variation of the direction of travel, for example upon lane change, and thereby the distance between the motor vehicle and the object is decreased. By the speed adaptation of the brightness variation and/or the contrast variation, thus, information about the object can be simply and intuitively provided to the driver.

In a configuration of the invention, the control device is adapted to vary the brightness and/or the contrast of the image displayed on the at least one display device only in an image area having the object as the partial image area. In particular, in the second operating mode of the at least one display device, only the image of the object itself has the increased brightness and/or the increased contrast. Thereto, the object can for example be recognized in the image by means of an object recognition algorithm. In contrast, a remaining image area representing the background of the object in the environmental region has a lower brightness and/or a lower contrast. Thus, the object is optically highlighted on the at least one display device. Thus, the area relevant to the driver is advantageously optically marked.

Therein, it can be provided that after varying the brightness and/or the contrast of the partial image area, the control device is adapted to vary the brightness and/or the contrast of a remaining image area different from the partial image area and to adapt it to the varied brightness and/or the varied contrast of the partial image area. Thus, the object is first presented with increased brightness and/or increased contrast in the second operating mode of the display device. Thereafter, the brightness and/or the contrast of the background, thus of the remaining image area, are also increased and adapted to the already increased brightness and/or the already increased contrast of the object. Therein, the brightness of the remaining image area is in particular stepwise or slowly and continuously increasingly varied to avoid sudden glare of the vehicle driver. Thus, the object relevant to the driver can first be highlighted and finally the brightness and/or the contrast of the background can also be adapted such that the driver is able to particularly well capture the environmental region with the object on the at least one display device.

It can also be provided that the control device is adapted to present a warning sign on the at least one display device as the partial image area with the varied brightness and/or the varied contrast. According to this embodiment, the image is shown with a brightness sufficient for the driver and/or a contrast sufficient for the driver in the first operating mode of the display device such that the driver can perceive it. In the second operating mode, the warning sign is displayed as the partial image area. Otherwise stated, in the second operating mode of the at least one display device, the warning sign flashes.

In an advantageous configuration of the invention, the capturing device has an operating device for acquiring values for the brightness and/or the contrast input by a user, wherein the control device is adapted to vary the brightness and/or the contrast of the image displayed on the at least one display device depending on the values input by the user. This means that the user or the driver can select himself values for the brightness and/or the contrast. Thus, the user can for example select a minimum value for the brightness and/or the contrast for the image displayed by the at least one display device, which the image for example has in the first operating mode. The driver can also select a maximum value for the brightness and/or the contrast, which the displayed image has at least in certain areas in the second operating mode. The driver can also specify a ratio between minimum and maximum brightness and/or minimum and maximum contrast as the value. Therein, the minimum and maximum values can for example be adapted to the brightness in the environmental region with maintaining the input value for the ratio. By acquiring the values input on the part of the driver, the light sensitivity of the driver can advantageously be taken into account and the driver can be prevented from being glared by a screen set too bright. The operating device can be a vehicle-side input device, for example a touch-sensitive screen, in particular the at least one display device itself. However, it can also be provided that the operating device is a user-side mobile terminal, for example a smart phone of the driver, which is able to communicate with the control device.

Additionally, the invention relates to a driver assistance system with a capturing device. The driver assistance system is formed for monitoring the environmental region of the motor vehicle and thereby for assisting the driver of the motor vehicle in his driving job.

A motor vehicle according to the invention includes a driver assistance system according to the invention. The motor vehicle is in particular formed as a passenger car. Preferably, the motor vehicle is formed without wing mirrors. Therein, monitoring of the environmental region, in particular monitoring of the rearward environmental region, is taken over by the capturing device. Thereto, the cameras of the camera-monitor system can for example be disposed in lateral areas of the motor vehicle, which capture the environmental region in images. In a passenger cabin, the at least one display device of the capturing device can be provided, on which the environmental region captured by the cameras is displayed. By adapting the brightness and/or the contrast depending on the object, the motor vehicle is formed in particularly energy saving manner.

The preferred embodiments presented with respect to the capturing device according to the invention and the advantages thereof correspondingly apply to the driver assistance system according to the invention as well as to the motor vehicle according to the invention.

With indications of "front", "rear", "rearward", "front-side", "interior", "exterior", "lateral", "driver's side", "passenger's side", "forward direction (x-direction)" etc., the positions and orientations given with intended attachment of the capturing device to the motor vehicle and with an observer then standing in front of the motor vehicle and looking in the direction of the motor vehicle are specified.

Further features of the invention are apparent from the claims, the figures and the description of figures. The features and feature combinations mentioned above in the description as well as the features and feature combinations mentioned below in the description of figures and/or shown in the figures alone are usable not only in the respectively specified combination, but also in other combinations or alone, without departing from the scope of the invention. Thus, implementations are also to be considered as encompassed and disclosed by the invention, which are not explicitly shown in the figures and explained, but arise from and can be generated by separated feature combinations from the explained implementations. Implementations and feature combinations are also to be considered as disclosed, which thus do not have all of the features of an originally formulated independent claim. Moreover, implementations and feature combinations are also to be considered as disclosed, in particular by the explanations set out above, which extend beyond or deviate from the feature combinations set out in the relations of the claims.

In the following, the invention is now explained in more detail based on a preferred embodiment as well as with reference to the attached drawings.

There show:
- Fig. 1: a schematic illustration of an embodiment of a motor vehicle according to the invention;
- Fig. 2: a schematic illustration of an embodiment of the motor vehicle according to the invention in capturing an object;
- Fig. 3: a schematic illustration of an interior of an embodiment of a motor vehicle according to the invention, and
- Fig. 4: a schematic illustration of a further embodiment of a motor vehicle according to the invention.

In the figures, identical as well as functionally identical elements are provided with the same reference characters.

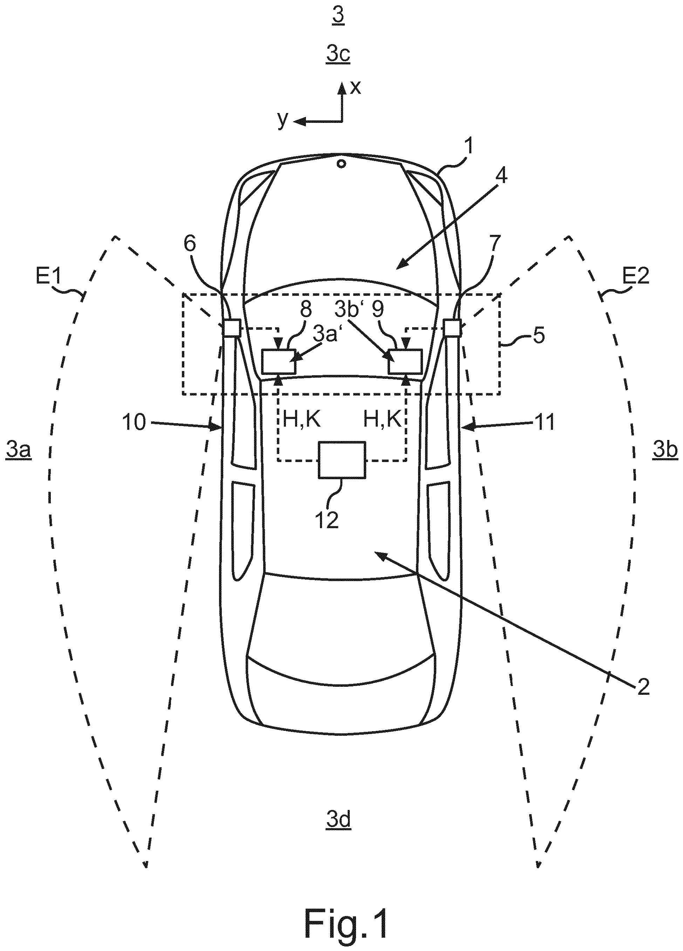

Fig. 1 shows a motor vehicle 1 according to the present invention. The motor vehicle 1 is in particular formed as a passenger car. The motor vehicle 1 includes a driver assistance system 2 formed for monitoring an environmental region 3 of the motor vehicle 1. Thereto, the driver assistance system 2 includes a capturing device 4. The capturing device 4 is formed to replace exterior mirrors of the motor vehicle 1 such that the motor vehicle 1 is formed without exterior mirrors here. In other words, this means that the motor vehicle 1 does not have wing mirrors or exterior mirrors.

The capturing device 4 comprises a camera-monitor system 5, which includes at least one camera 6, 7 as well as at least one display device 8, 9. Here, the camera-monitor system 5 comprises two cameras 6, 7, which are in particular disposed at the outside of the motor vehicle 1. Therein, a first camera 6 is associated with a driver's side 10 of the motor vehicle 1 and serves for capturing a driver-side environmental region 3a in images. Thereto, the first camera 6 has a first capturing area E1. A second camera 7 is associated with a passenger's side 11 of the motor vehicle 1. The second camera 7 serves for capturing a passenger-side environmental region 3b in images. Thereto, the second camera 7 has a second capturing area E2. The capturing device 4 can also have a rear camera not shown here for capturing a rearward environmental region 3d such that an interior mirror of the motor vehicle 1 can also be replaced by means of the capturing device 4.

In addition, here, the camera-monitor system 5 has two display devices 8, 9, which are disposed in an interior 13 (see Fig .3) of the motor vehicle 1. Therein, a first display device 8 is associated with the driver's side 10 of the motor vehicle 1 and displays an image 3a' of the driver-side environmental region 3a captured by the first camera 6. A second display device 9 is associated with the passenger side 11 and displays an image 3b' of the passenger-side environmental region 3b captured by the second camera 7. The display devices 8, 9 can for example be formed as screens or monitors, in particular touch-sensitive screens, or as head-up displays.

In addition, the capturing device 4 has a control device 12, which can for example be formed as a vehicle-side controller. The control device 12 is adapted to communicate with the display devices 8, 9 to vary a brightness H and/or a contrast K of the images 3a', 3b' displayed on the display devices 8, 9.

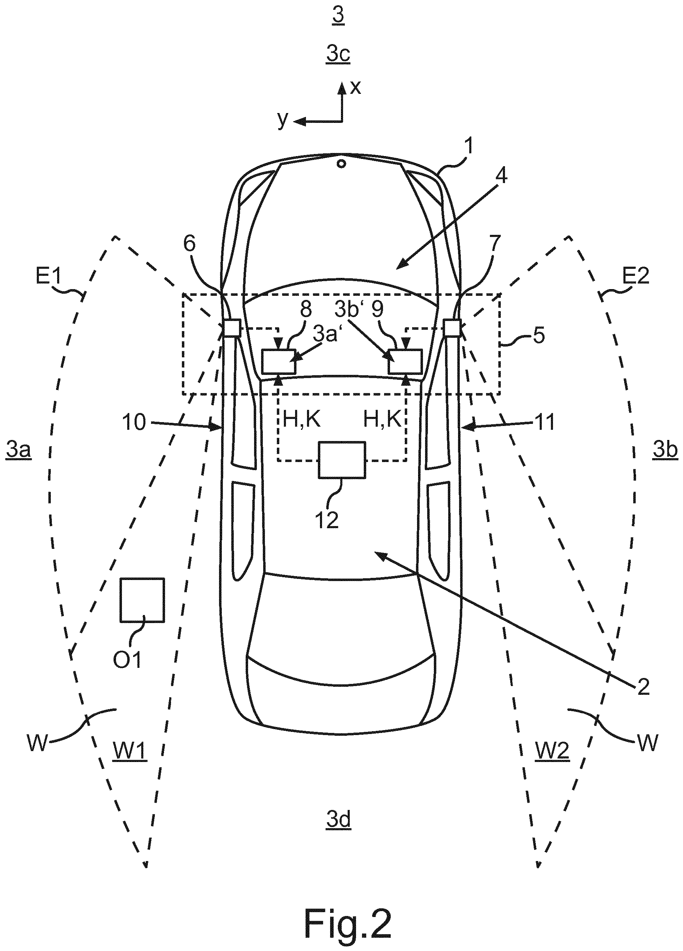

Fig. 2 shows the motor vehicle 1 according to Fig. 1, wherein an object O1 is in the environmental region 3 of the motor vehicle 1. Here, the object O1 is in the driver-side environmental region 3a and in the first capturing area E1 of the first camera 6. Thus, the object O1 can be recognized based on the image captured by the first camera 6. In addition, the capturing device 4 can recognize if the object O1 is in a predetermined warning area W of the environmental region. Thereto, the control device 12 can for example determine a position of the object O1 in the environmental region 3 based on the images captured by the first camera 6 by means of a stereo algorithm and assess if the captured position is within the predetermined warning area W.

Here, the predetermined warning area W comprises a partial area W1 of the environmental region 3 adjoining to the driver's side 10 and a partial area W2 of the environmental region 3 adjoining to the passenger side 11, which extend wedge-shaped rearwards towards a rear area of the motor vehicle 1. The warning area W can for example comprise an area, which corresponds to a blind spot area in conventional motor vehicles equipped with particularly unfavorably positioned wing mirrors.

If the motor vehicle 1 swung out in y-direction into the driver-side environmental region 3a, thus entered the warning area W, thus, a collision with the object O1 would impend. In order to prevent this, a driver of the motor vehicle 1 is warned of the presence of the object O1 in the warning area W. Thereto, the control device 12 varies the brightness H and/or the contrast K of the images 3a', 3b' displayed on the at least one display device 8, 9 at least in a partial image area if the object O1 is in the warning area W. In particular, the control device 12 only varies the brightness H and/or the contrast K of that image 3a', 3b', which represents the environmental region 3a, 3b with the object O1. Here, the control device 12 thus only varies the image 3a' of the first display device 8. In order to prevent glare of the driver, therein, the control device 12 can stepwise vary the brightness H and/or the contrast K.

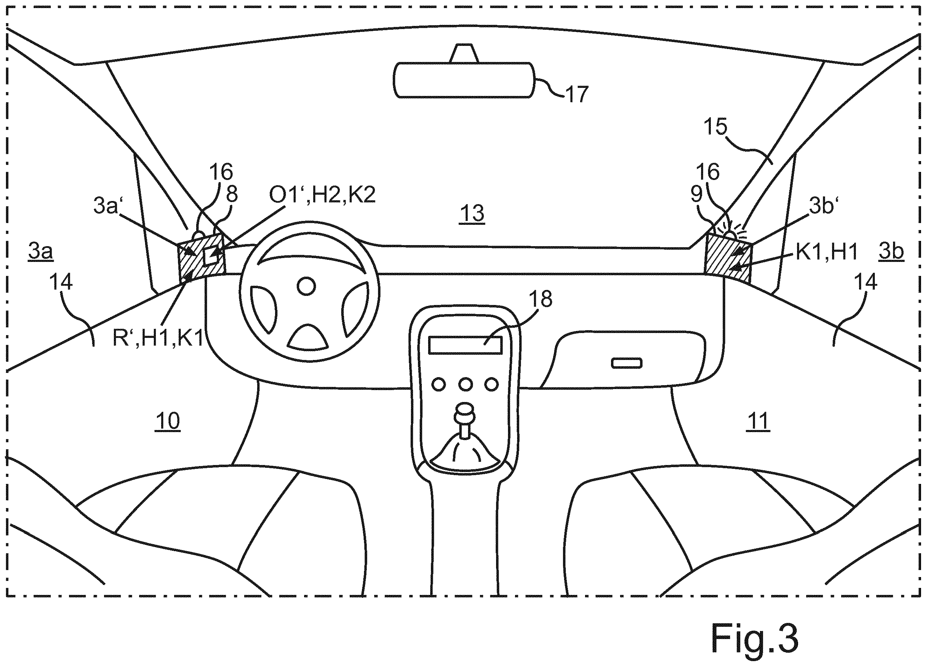

Fig. 3 shows the interior 13 of the motor vehicle 1 according to Fig. 2 with the display devices 8, 9. Here, the first display device 8 associated with the driver's side 10 is disposed on a driver-side side door 14 and/or an A pillar 15 of the motor vehicle 1 at the driver's side 10. Here, the second display device 9 associated with the passenger's side 11 is disposed on a passenger-side side door 14 and/or on the A pillar 15 at the passenger's side 11 of the motor vehicle 1. However, it can also be provided that the camera-monitor system has only one display device, which can be centrally disposed on a dashboard or be integrated in an interior mirror 17.

If there is no object O1 in the warning area W, thus, the control device 12 operates the display device 8, 9 in a first operating mode, in which the displayed image 3a', 3b' has a first value H1, K1 for the brightness H and/or the contrast K1. According to Fig. 2, there is no object O1 in the passenger-side environmental region 3b and thereby either not in the passenger-side partial area W2 of the warning area W. Therefore, the second display device 9 is here operated in the first operating mode. In particular, the displayed image 3b' is there presented as a contrastless grey image. As soon as an object O1 is in the warning area W, the control device 12 transfers the display device 8, 9 from the first operating mode into the second operating mode, in which the displayed image 3a', 3b' has a second value H2, K2 for the brightness H and/or the contrast K greater compared to the first value H1, K1 at least in certain areas. According to Fig. 2, the object O1 is in the driver-side environmental region 3a in the driver-side partial area W1 of the warning area W. Therefore, the control device 12 here transfers the first display device 8 into the second operating mode to visualize to the driver that the object O1 is in the warning area W at the driver's side. Therein, it can be provided that only the partial image area O1', in which the object O1 is located in the displayed image 3a', is displayed with the second value K2, H2 for the brightness H and/or the contrast K. A remaining image area R' has the first brightness value H1 and/or contrast value K1 lower compared to the second brightness value H2 and/or second contrast value K2. After providing the second brightness value H2 and/or the second contrast value K2 for the partial image area O1' with the object O1, the brightness H and/or the contrast K of the remaining image area R' can also be increased from the first value H1, K1 to the second value H2, K2. After increasing the brightness H and/or the contrast K for the partial image area O1' and the remaining image area R', the image 3a' is in particular presented as a high-contrast color image.

Therein, a speed of the brightness variation and/or the contrast variation can be adapted to a speed of the object O1 and/or to a distance of the object O1 to the motor vehicle 1 by the control device 12. Thus, the speed of the brightness variation and/or the contrast variation can for example be increased with increasing speed of the object O1 and/or decreasing distance of the object O1 to the motor vehicle 1. Thus, additional information about the object O1 can be conveyed to the driver by the speed of the brightness variation and/or the contrast variation.

In order to visualize functionality of the display devices 8, 9 in the first operating mode to the driver, in which they display the contrastless grey image, the display devices 8, 9 here each have a light emitting transmitting element 16, for example in the form of a green light emitting diode or LED. Since here the second display device 9 is operated for displaying the contrastless grey image in the first operating mode, the transmitting element 16 of the second display device 9 flashes to clarify the operability of the display device 9 to the driver.

Furthermore, it can be provided that the first operating mode of the display devices 8, 9 can also be terminated in user-initiated manner. By a user invention, the display device 8, 9 can then be transferred from the first operating mode into the second or a third operating mode. In the third operating mode, the brightness H and/or the contrast K can for example have a third value, which is between the first value H1, K1 and the second value H2, K2. For terminating the first operating mode, for example, a viewing direction of the driver can be captured and the high-contrast color image can always be shown instead of the contrastless grey image if the driver looks at the corresponding display device 8, 9. The driver can also terminate the first operating mode of the display devices 8, 9 by actuating an operating element not shown here and/or by engaging the reverse gear.

In addition, the capturing device 4 has an operating device 18, which is here formed in the form of a vehicle-side input apparatus, for example a touch-sensitive operating unit. The driver can input the first and second values H1, H2, K1, K2 for the brightness H and/or the contrast K via the operating device 18, wherein the control device 12 provides the first input value H1, K1 for the first operating mode of the display device 8, 9 and provides the second input value H2, K2 for the second operating mode of the display device 8, 9.

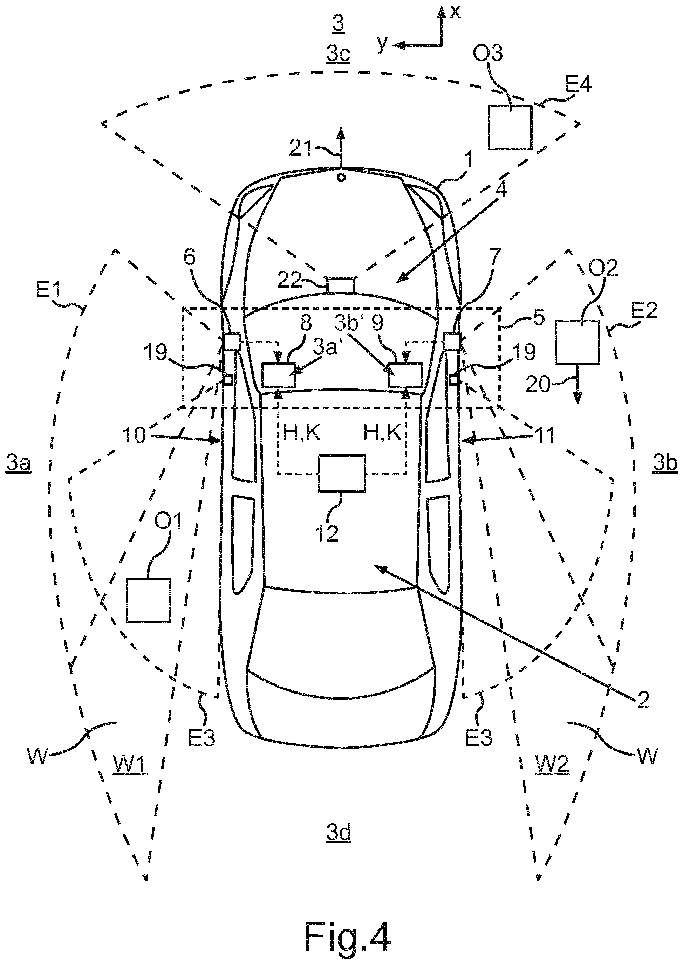

Fig. 4 shows a further embodiment of the motor vehicle 1. Here, the capturing device 4 additionally has a first sensor device 19. The first sensor device 19 can have at least one distance sensor, for example an ultrasonic sensor and/or a radar sensor and/or a laser scanner. By means of the first sensor device 19, the environmental region 3 can also be monitored and objects in the environmental region 3 can be captured. The first sensor device 19 has a third capturing area E3. Since the object O1 is in the third capturing area E3, the object O1 as well as the distance of the object O1 to the motor vehicle 1 can additionally be captured by the first sensor device 19. By means of the first sensor device 19, thus, redundancy can be achieved and/or an unfavorable positioning of the cameras 6, 7 can be compensated for.

Here, a second object O2 is in the second capturing area E2 of the second camera 7. Thus, the camera 7 captures the object O2. The capturing device 4 is adapted to capture a direction of movement 20 of the object O2. Here, the motor vehicle 1 moves in forward direction (positive x-direction). The object O2 moves towards the motor vehicle 1, thus, in negative x-direction. The direction of movement 20 of the object O2 is therefore opposite to a direction of movement 21 of the motor vehicle 1. In other words, this means that the object O2 approaches the motor vehicle 1 from the front. As soon as the object O2 enters the warning area W, thus here the passenger-side partial area W2, the control device 12 further operates the second display device 9 in the first operating mode. Namely, it is assumed that the object O2 has already been recognized by the driver of the motor vehicle 1. Thus, a warning of the driver by the brightness variation and/or the contrast variation can be omitted.

In addition, here, the capturing device 4 has a second sensor device 22 different from the cameras 6, 7 and the first sensor device 19. The second sensor device 22 is adapted to monitor a front-side environmental region 3c adjoining to a front area of the motor vehicle 1. Thereto, the second sensor device 22 has a fourth capturing area E4. The second sensor device 22 can for example include a front camera and/or a laser scanner and/or a radar sensor. If a third object O3 is now in the fourth capturing area E4 of the second sensor device 22 and therefore is captured by it, the second display device 9 then is also further operated in the first operating mode if the object O3 enters the warning area W, thus here the passenger-side partial area W2 of the warning area W. Because here too, it is assumed that the driver of the motor vehicle 1 himself already has caught sight of the object O3 for example through a windscreen of the motor vehicle 1.

## Claims

1. Capturing device (4) for a motor vehicle (1) for monitoring an environmental region (3) of the motor vehicle (1), including a camera-monitor system (5) comprising at least one camera (6, 7) for capturing the environmental region (3) in images (3a', 3b') and at least one display device (8, 9) for displaying the images (3a', 3b') captured by the at least one camera (6, 7), and including a control device (12) for varying a brightness (H) and a contrast (K) of the images (3a', 3b') displayed by the at least one display device (8, 9)
**characterized in that**
the control device (12) is adapted to vary the contrast (K) and optionally the brightness (H) of the image (3a', 3b') displayed on the at least one display device (8, 9) in presence of an object (O1) captured by the capturing device (4) in a predetermined warning area (W) of the environmental region (3) in a partial image area (O1') and the control device (12) is adapted to operate the at least one display device (8, 9) in a first operating mode in presence of the object (O1) outside of the predetermined warning area (W) in which the at least one display device (8, 9) is adapted to present the image (3a', 3b') as a contrastless grey image, and to transfer the at least one display device (8, 9) into a second operating mode in which the displayed image (3a', 3b') is presented as a high contrast color image upon entry of the object (O1) into the predetermined warning area (W) wherein the control device (12) is adapted to vary the contrast (K) and optionally the brightness (H) of the image (3a', 3b') displayed on the at least one display device (8, 9) only in an image area having the object (O1) as the partial image area (O1') while after varying the contrast and optionally the brightness (H) of the partial image area (O1'), the control device (12) is adapted to vary the contrast (K) and optionally the brightness (H) of a remaining image area (R') different from the partial image area (O1') and to adapt it to the varied contrast (K) and optionally the varied brightness (H) of the partial image area (O1').

2. Capturing device (4) according to claim 1,
**characterized in that**
the control device (12) is adapted to determine the presence of the object (O1) in the predetermined warning area (W) based on the images (3a', 3b') captured by the at least one camera (6, 7), and/or the capturing device (4) comprises a first sensor device (19) different from the at least one camera (6, 7), which is adapted to capture the presence of the object (O1) in the predetermined warning area (W).

3. Capturing device (4) according to claim 1 or 2,
**characterized in that**
respective first partial areas (W1, W2) of the environmental region (3) laterally adjoining to the motor vehicle (1), extending wedge-shaped towards a rear area of the motor vehicle (1) are preset as the warning area (W).

4. Capturing device (4) according to any one of the preceding claims,
**characterized in that**
the capturing device (4) is adapted to determine a direction of movement (20) of the object (O2), and the control device (12) is adapted to further operate the at least one display device (8, 9) in the first operating mode in case of a direction of movement (20) of the object (O2) opposite to a direction of movement (21) of the motor vehicle (1) despite of entry of the object (O2) into the predetermined warning area (W).

5. Capturing device (4) according to any one of the preceding claims,
**characterized in that**
the control device (12) is adapted to further operate the at least one display device (8, 9) in the first operating mode in case of presence of the object (O3) within a predetermined second partial area (3c) of the environmental region (3) different from the warning area (W) before entry into the warning area (W) despite of entry of the object (O3) into the predetermined warning area (W).

6. Capturing device (4) according to claim 5,
**characterized in that**
the capturing device (4) comprises a second sensor device (22) different from the at least one camera (6, 7) for monitoring a front-side partial area of the environmental region (3) adjoining to a front area of the motor vehicle (1) as the second partial area (3c), and the control device (12) is adapted to further operate the display device (8, 9) in the first operating mode in case of presence of the object (O3) within the front-side partial area (3c) before entry into the warning area (W) despite of entry of the object (O3) into the warning area (W).

7. Capturing device (4) according to any one of the preceding claims,
**characterized in that**
the at least one display device (8, 9) has a light emitting transmitting element (16) for outputting a standby operation of the at least one display device (8, 9), wherein the control device (12) is adapted to control the transmitting element (16) in the first operating mode of the at least one display device (8, 9), in which the at least one display device (8, 9) presents the contrastless grey image, for emitting light and thereby for outputting the standby operation of the at least one display device (8, 9).

8. Capturing device (4) according to any one of the preceding claims,
**characterized in that**
the control device (12) is adapted to additionally terminate the first operating mode of the at least one display device (8, 9) in user-initiated manner.

9. Capturing device (4) according to any one of the preceding claims,
**characterized in that**
the control device (12) is adapted to preset a speed of a variation of the brightness (H) and the contrast (K) depending on a speed of the captured object (O1) and/or depending on a distance of the captured object (O1) to the motor vehicle (1).

10. Capturing device (4) according to any one of the preceding claims,
**characterized in that**
the control device (12) is adapted to present a warning sign as the partial image area (O1') with the varied brightness (H) and the varied contrast (K) on the at least one display device (8, 9).

11. Capturing device (4) according to any one of the preceding claims,
**characterized in that**
the capturing device (4) has an operating device (18) for acquiring values (H1, H2, K1, K2) for the brightness (H) and the contrast (K) input by a user, and the control device (12) is adapted to vary the brightness (H) and/or the contrast (K) of the image (3a', 3b') displayed on the at least one display device (8, 9) depending on the values (H1, H2, K1, K2) input by the user.

12. Driver assistance system (2) with a capturing device (4) according to any one of the preceding claims.

13. Motor vehicle (1) with a driver assistance system (2) according to claim 12.

14. Motor vehicle (1) according to claim 12,
**characterized in that**
the motor vehicle (1) is formed without wing mirrors.

## Patentansprüche

1. Erfassungsvorrichtung (4) für ein Kraftfahrzeug (1) zum Überwachen eines Umgebungsgebiets (3) des Kraftfahrzeugs (1), die ein Kameraüberwachungssystem (5) aufweist, das umfasst:
mindestens eine Kamera (6, 7) zum Erfassen des Umgebungsgebiets (3) in Bildern (3a', 3b') und mindestens eine Anzeigevorrichtung (8, 9) zum Anzeigen der Bilder (3a', 3b'), die mit der mindestens einen Kamera (6, 7) erfasst wurden, und die eine Steuervorrichtung (12) zum Variieren einer Helligkeit (H) und eines Kontrastes (K) der Bilder (3a', 3b') aufweist, die durch die mindestens eine Anzeigevorrichtung (8, 9) angezeigt werden,
**dadurch gekennzeichnet, dass**
die Steuervorrichtung (12) geeignet ist zum Variieren des Kontrastes (K) und optional der Helligkeit (H) des Bildes (3a', 3b'), das auf der mindestens einen Anzeigevorrichtung (8, 9) in Gegenwart eines Objekts (O1) angezeigt wird, das durch die Erfassungsvorrichtung (4) in einem vorbestimmten Warnbereich (W) des Umgebungsgebiets (3) in einem Teilbildbereich (O1') erfasst wurde, und
die Steuervorrichtung (12) geeignet ist zum Betreiben der mindestens einen Anzeigevorrichtung (8, 9) in der Gegenwart des Objekts (O1) außerhalb des vorbestimmten Warnbereichs (W) in einem ersten Betriebsmodus, in dem die mindestens eine Anzeigevorrichtung (8, 9) geeignet ist zum Darstellen des Bildes (3a', 3b') als ein kontrastloses graues Bild und zum Überführen der mindestens einen Anzeigevorrichtung (8, 9) in einen zweiten Betriebsmodus, in dem das angezeigte Bild (3a', 3b') nach einem Eintreten des Objekts (O1) in den vorbestimmten Warnbereich (W) als ein Farbbild mit hohem Kontrast dargestellt wird, wobei die Steuervorrichtung (12) geeignet ist zum Variieren des Kontrastes (K) und optional der Helligkeit (H) des Bildes (3a', 3b'), das auf der mindestens einen Anzeigevorrichtung (8, 9) nur in einem Bildbereich angezeigt wird, der das Objekt (O1) als den Teilbildbereich (O1') aufweist, während die Steuervorrichtung (12) nach dem Variieren des Kontrastes und optional der Helligkeit (H) des Teilbildbereichs (O1') geeignet ist zum Variieren des Kontrastes (K) und optional der Helligkeit (H) eines verbleibenden Bildbereichs (R'), der verschieden von dem Teilbildbereich (O1') ist, und zum Anpassen desselben an den variierten Kontrast (K) und optional an die variierte Helligkeit (H) des Teilbildbereichs (O1').

2. Erfassungsvorrichtung (4) nach Anspruch 1,
**dadurch gekennzeichnet, dass**
die Steuervorrichtung (12) geeignet ist zum Ermitteln der Gegenwart des Objekts (O1) in dem vorbestimmten Warnbereich (W) aufgrund der Bilder (3a', 3b'), die von der mindestens einen Kamera (6, 7) erfasst wurden, und/oder die Erfassungsvorrichtung (4) eine erste Sensorvorrichtung (19) umfasst, die verschieden von der mindestens einen Kamera (6, 7) ist und die geeignet ist zum Erfassen der Gegenwart des Objekts (O1) in dem vorbestimmten Warnbereich (W).

3. Erfassungsvorrichtung (4) nach Anspruch 1 oder 2,
**dadurch gekennzeichnet, dass**
jeweilige erste Teilbereiche (W1, W2) des Umgebungsgebiets (3), die seitlich an das Kraftfahrzeug (1) angrenzen und die sich keilförmig in Richtung auf einen rückwärtigen Bereich des Kraftfahrzeugs (1) erstrecken, als Warnbereich (W) voreingestellt sind.

4. Erfassungsvorrichtung (4) nach einem der vorhergehenden Ansprüche,
**dadurch gekennzeichnet, dass**
die Erfassungsvorrichtung (4) geeignet ist zum Ermitteln einer Bewegungsrichtung (20) des Objekts (O2) und
die Steuervorrichtung (12) geeignet ist zum weiteren Betreiben der mindestens einen Anzeigevorrichtung (8, 9) in dem ersten Betriebsmodus für den Fall, dass eine Bewegungsrichtung (20) des Objekts (O2) entgegengesetzt zu einer Bewegungsrichtung (21) des Kraftfahrzeugs (1) trotz des Eintretens des Objekts (O2) in den vorbestimmten Warnbereich (W) ist.

5. Erfassungsvorrichtung (4) nach einem der vorhergehenden Ansprüche,
**dadurch gekennzeichnet, dass**
die Steuervorrichtung (12) geeignet ist zum weiteren Betreiben der mindestens einen Anzeigevorrichtung (8, 9) in dem ersten Betriebsmodus für den Fall einer Gegenwart des Objekts (O3), vor dem Eintreten in den Warnbereich (W), innerhalb eines vorbestimmten zweiten Teilbereichs (3c) des Umgebungsgebiets (3), der verschieden von dem Warnbereich (W) ist, trotz des Eintretens des Objekts (O3) in den vorbestimmten Warnbereich (W).

6. Erfassungsvorrichtung (4) nach Anspruch 5,
**dadurch gekennzeichnet, dass**
die Erfassungsvorrichtung (4) eine zweite Sensorvorrichtung (22), die verschieden von der mindestens einen Kamera (6, 7) ist, zum Überwachen eines vorderseitigen Teilbereichs des Umgebungsgebiets (3) umfasst, der als der zweite Teilbereich (3c) an einen vorderen Bereich des Fahrzeugs (1) angrenzt, und
die Steuervorrichtung (12) geeignet ist zum weiteren Betreiben der Anzeigevorrichtung (8, 9) in dem ersten Betriebsmodus für den Fall einer Gegenwart des Objekts (O3), vor dem Eintreten in den Warnbereich (W), innerhalb des vorderseitigen Teilbereichs (3c), trotz des Eintretens des Objekts (O3) in den vorbestimmten Warnbereich (W).

7. Erfassungsvorrichtung (4) nach einem der vorhergehenden Ansprüche,
**dadurch gekennzeichnet, dass**
die mindestens eine Anzeigevorrichtung (8, 9) ein lichtemittierendes Übertragungselement (16) zum Ausgeben eines Standby-Betriebs der mindestens einen Anzeigevorrichtung (8, 9) aufweist, wobei die Steuervorrichtung (12) geeignet ist zum Steuern des Übertragungselements (16) in dem ersten Betriebsmodus der mindestens einen Anzeigevorrichtung (8, 9), in der die mindestens eine Anzeigevorrichtung (8, 9) das kontrastlose graue Bild darstellt, um ein Licht zu emittieren und um dadurch den Standby-Betrieb der mindestens einen Anzeigevorrichtung (8, 9) auszugeben.

8. Erfassungsvorrichtung (4) nach einem der vorhergehenden Ansprüche,
**dadurch gekennzeichnet, dass**
die Steuervorrichtung (12) geeignet ist zum zusätzlichen Beenden des ersten Betriebsmodus der mindestens einen Anzeigevorrichtung (8, 9) in einer benutzerinitiierten Weise.

9. Erfassungsvorrichtung (4) nach einem der vorhergehenden Ansprüche,
**dadurch gekennzeichnet, dass**
die Steuervorrichtung (12) geeignet ist zum Voreinstellen einer Geschwindigkeit einer Variation der Helligkeit (H) und des Kontrasts (K) in Abhängigkeit von einer Geschwindigkeit des erfassten Objekts (O1) und/oder in Abhängigkeit von einem Abstand des erfassten Objekts (O1) von dem Kraftfahrzeug (1).

10. Erfassungsvorrichtung (4) nach einem der vorhergehenden Ansprüche,
**dadurch gekennzeichnet, dass**
die Steuervorrichtung (12) geeignet ist zum Darstellen eines Warnsignals als den Teilbildbereich (O1') mit der variierten Helligkeit (H) und mit dem variierten Kontrast (K) auf der mindestens einen Anzeigevorrichtung (8, 9).

11. Erfassungsvorrichtung (4) nach einem der vorhergehenden Ansprüche,
**dadurch gekennzeichnet, dass**
die Erfassungsvorrichtung (4) eine Betriebsvorrichtung (18) zum Erlangen von Werten (H1, H2, K1, K2) für die Helligkeit (H) und den Kontrast (K) aufweist, die von einem Benutzer eingegeben werden, und die Steuervorrichtung (12) geeignet ist zum Variieren der Helligkeit (H) und/oder des Kontrasts (K) des Bildes (3a', 3b'), das auf der mindestens einen Anzeigevorrichtung (8, 9) angezeigt wird, in Abhängigkeit von den Werten (H1, H2, K1, K2), die von einem Benutzer eingegeben werden.

12. Fahrerassistenzsystem (2) mit einer Erfassungsvorrichtung (4) nach einem der vorhergehenden Ansprüche.

13. Kraftfahrzeug (1) mit einem Fahrerassistenzsystem (2) nach Anspruch 12.

14. Kraftfahrzeug (1) nach Anspruch 12,
**dadurch gekennzeichnet, dass**
das Kraftfahrzeug (1) ohne Außenspiegel gebaut wird.

## Revendications

1. Dispositif de capture (4) pour un véhicule à moteur (1) pour surveiller une région environnementale (3) du véhicule à moteur (1), incluant un système de surveillance par caméra (5) comprenant au moins une caméra (6, 7) pour capturer la région environnementale (3) en images (3a', 3b') et au moins un dispositif d'affichage (8, 9) pour afficher les images (3a', 3b') capturées par l'au moins une caméra (6, 7), et incluant un dispositif de contrôle (12) pour faire varier une luminosité (H) et un contraste (K) des images (3a', 3b') affichées par l'au moins un dispositif d'affichage (8, 9),
**caractérisé en ce que** :
le dispositif de contrôle (12) est conçu pour faire varier le contraste (K) et éventuellement la luminosité (H) de l'image (3a', 3b') affichée sur l'au moins un dispositif d'affichage (8, 9) en présence d'un objet (O1) capturé par le dispositif de capture (4) dans une zone d'avertissement (W) prédéterminée de la région environnementale (3) dans une zone d'image partielle (O1'), et
le dispositif de contrôle (12) est conçu pour faire fonctionner l'au moins un dispositif d'affichage (8, 9) dans un premier mode de fonctionnement en présence de l'objet (O1) en dehors de la zone d'avertissement (W) prédéterminée, dans lequel l'au moins un dispositif d'affichage (8, 9) est conçu pour présenter l'image (3a', 3b') sous la forme d'une image grise sans contraste, et pour transférer l'au moins un dispositif d'affichage (8, 9) dans un second mode de fonctionnement dans lequel l'image affichée (3a', 3b') est présentée sous la forme d'une image en couleur fortement contrastée au moment de l'entrée de l'objet (O1) dans la zone d'avertissement (W) prédéterminée,
le dispositif de contrôle (12) étant conçu pour faire varier le contraste (K) et éventuellement la luminosité (H) de l'image (3a', 3b') affichée sur l'au moins un dispositif d'affichage (8, 9) uniquement dans une zone d'image ayant l'objet (O1) en tant que zone d'image partielle (O1') pendant la période de temps postérieure à la variation du contraste et éventuellement de la luminosité (H) de la zone d'image partielle (O1'), et
le dispositif de contrôle (12) étant conçu pour faire varier le contraste (K) et éventuellement la luminosité (H) d'une zone d'image restante (R') différente de la zone d'image partielle (O1') et pour l'adapter au contraste (K) et éventuellement à la luminosité (H) variés de la zone d'image partielle (O1').

2. Dispositif de capture (4) selon la revendication 1, **caractérisé en ce que** :
le dispositif de contrôle (12) est conçu pour déterminer la présence de l'objet (O1) dans la zone d'avertissement (W) prédéterminée sur la base des images (3a', 3b') capturées par l'au moins une caméra (6, 7), et/ou
le dispositif de capture (4) comprend un premier dispositif capteur (19) différent de l'au moins une caméra (6, 7), conçu pour capturer la présence de l'objet (O1) dans la zone d'avertissement (W) prédéterminée.

3. Dispositif de capture (4) selon la revendication 1 ou 2, **caractérisé en ce que** :
des premières zones partielles (W1, W2) respectives de la région environnementale (3), attenantes latéralement au véhicule à moteur (1) et s'étendant en forme de coin vers une zone arrière du véhicule à moteur (1), sont prédéfinies comme étant la zone d'avertissement (W).

4. Dispositif de capture (4) selon l'une quelconque des revendications précédentes, **caractérisé en ce que** :
le dispositif de capture (4) est conçu pour déterminer une direction de déplacement (20) de l'objet (O2), et
le dispositif de contrôle (12) est conçu pour faire fonctionner en outre l'au moins un dispositif d'affichage (8, 9) dans le premier mode de fonctionnement en cas de direction de déplacement (20) de l'objet (O2) opposée à une direction de déplacement (21) du véhicule à moteur (1) malgré une entrée de l'objet (O2) dans la zone d'avertissement (W) prédéterminée.

5. Dispositif de capture (4) selon l'une quelconque des revendications précédentes, **caractérisé en ce que** :
le dispositif de contrôle (12) est conçu pour faire fonctionner en outre l'au moins un dispositif d'affichage (8, 9) dans le premier mode de fonctionnement en cas de présence de l'objet (O3) dans une zone partielle (3c) prédéterminée de la région environnementale (3), différente de la zone d'avertissement (W), avant l'entrée dans la zone d'avertissement (W) malgré une entrée de l'objet (O3) dans la zone d'avertissement (W) prédéterminée.

6. Dispositif de capture (4) selon la revendication 5, **caractérisé en ce que** :
le dispositif de capture (4) comprend un second dispositif capteur (22), différent de l'au moins une caméra (6, 7), pour surveiller une zone partielle avant de la région environnementale (3) attenante à une zone avant du véhicule à moteur (1), en tant que seconde zone partielle (3c), et
le dispositif de contrôle (12) est conçu pour faire fonctionner en outre le dispositif d'affichage (8, 9) dans le premier mode de fonctionnement en cas de présence de l'objet (O3) dans la zone partielle avant (3c) avant l'entrée dans la zone d'avertissement (W) malgré une entrée de l'objet (O3) dans la zone d'avertissement (W).

7. Dispositif de capture (4) selon l'une quelconque des revendications précédentes, **caractérisé en ce que** :
l'au moins un dispositif d'affichage (8, 9) a un dispositif émetteur d'émission de lumière (16) pour indiquer une opération de veille de l'au moins un dispositif d'affichage (8, 9),
le dispositif de contrôle (12) étant conçu pour contrôler l'élément émetteur (16), dans le premier mode de fonctionnement de l'au moins un dispositif d'affichage (8, 9) dans lequel l'au moins un dispositif d'affichage (8, 9) présente l'image grise sans contraste, pour que ledit élément émetteur émette de la lumière et indique ainsi l'opération de veille de l'au moins un dispositif d'affichage (8, 9).

8. Dispositif de capture (4) selon l'une quelconque des revendications précédentes, **caractérisé en ce que** :
le dispositif de contrôle (12) est conçu pour mettre fin au premier mode de fonctionnement de l'au moins un dispositif d'affichage (8, 9) d'une manière amorcée par l'utilisateur.

9. Dispositif de capture (4) selon l'une quelconque des revendications précédentes, **caractérisé en ce que** :
le dispositif de contrôle (12) est conçu pour prérégler une vitesse d'une variation de la luminosité (H) et du contraste (K) selon une vitesse de l'objet capturé (O1) et/ou selon une distance de l'objet capturé (O1) au véhicule à moteur (1).

10. Dispositif de capture (4) selon l'une quelconque des revendications précédentes, **caractérisé en ce que** :
le dispositif de contrôle (12) est conçu pour présenter un signe d'avertissement en tant que zone d'image partielle (O1') avec la luminosité (H) variée et le contraste (K) varié sur l'au moins un dispositif d'affichage (8, 9).

11. Dispositif de capture (4) selon l'une quelconque des revendications précédentes, **caractérisé en ce que** :
le dispositif de capture (4) a un dispositif d'exploitation (18) pour acquérir des valeurs (H1, H2, K1, K2) de la luminosité (H) et du contraste (K) entrées par un utilisateur, et
le dispositif de contrôle (12) est conçu pour faire varier la luminosité (H) et/ou le contraste (K) de l'image (3a', 3b') affichée sur l'au moins un dispositif d'affichage (8, 9) selon les valeurs (H1, H2, K1, K2) entrées par l'utilisateur.

12. Système d'assistance au conducteur (2) avec un dispositif de capture (4) selon l'une quelconque des revendications précédentes.

13. Véhicule à moteur (1) avec un système d'assistance au conducteur (2) selon la revendication 12.

14. Véhicule à moteur (1) selon la revendication 12, **caractérisé en ce que** :
le véhicule à moteur (1) est fabriqué sans rétroviseurs extérieurs.
